**Europäisches Patentamt**

**European Patent Office**

**Office européen des brevets**

(19)

(11) Numéro de publication : **0 401 097 B1**

## (12) FASCICULE DE BREVET EUROPEEN

(45) Date de publication du fascicule du brevet :
**23.12.92 Bulletin 92/52**

(51) Int. Cl.$^5$ : **F16B 21/16**

(21) Numéro de dépôt : **90401400.8**

(22) Date de dépôt : **25.05.90**

---

(54) **Dispositif de verrouillage d'un connecteur.**

---

(30) Priorité : **29.05.89 FR 8906985**

(43) Date de publication de la demande :
**05.12.90 Bulletin 90/49**

(45) Mention de la délivrance du brevet :
**23.12.92 Bulletin 92/52**

(84) Etats contractants désignés :
**CH DE ES GB IT LI NL**

(56) Documents cités :
**EP-A- 0 174 695**
**FR-A- 2 297 317**
**FR-A- 2 355 189**
**US-A- 4 645 372**

(73) Titulaire : **COMPAGNIE DEUTSCH (Société Anonyme)**
**10, rue Lionel-Terray**
**F-92502 Rueil-Malmaison (FR)**

(72) Inventeur : **Moreau, Jean-Luc**
**25 Boulevard Jean Jaurès**
**F-28200 Chateaudun (FR)**

(74) Mandataire : **Laget, Jean-Loup et al**
**Cabinet Pierre Loyer 77, rue Boissière**
**F-75116 Paris (FR)**

EP 0 401 097 B1

Jouve, 18, rue Saint-Denis, 75001 PARIS

## Description

La présente invention concerne d'une manière générale des connecteurs et par exemple ceux couramment utilisés à l'heure actuelle, se présentant sous la forme de cassettes rectangulaires plates pouvant comporter des éléments modulaires.

De tels connecteurs présentent une partie fixe et une partie mobile que l'on solidarise l'une à l'autre de manière démontable.

Cette solidarisation est souvent faite à l'aide d'un écrou vissé sur une tige filetée solidaire de l'une des parties et traversant une ouverture de l'autre partie. Ce dispositif est long à mettre en oeuvre et donc coûteux à utiliser.

C'est pourquoi on cherche à mettre au point des dispositifs permettant d'assurer la solidarisation ainsi que la désolidarisation des deux parties de connecteur de manière rapide, aisée et fiable.

On connaît par le FR-A 2 355 189 un mécanisme de verrouillage destiné à assujettir l'une à l'autre une cabine basculante et le châssis d'un véhicule motorisé.

Le dispositif comporte une broche qui pénètre dans un organe femelle, le verrouillage est réalisé par des billes qui viennent immobiliser la tête de la broche. L'extrémité de la broche porte un piston de déverrouillage de manière à effectuer de déverrouillage depuis l'intérieur du verrou et non par une manoeuvre extérieure.

L'invention propose un dispositif de verrouillage dans lequel le déverrouillage s'effectue depuis l'extérieur. A cette fin l'invention a pour objet un ensemble comportant un connecteur et un dispositif de verrouillage, du genre destiné à être monté sur une première partie que présente ledit connecteur afin d'assurer le guidage et le verrouillage d'un élément globalement cylindrique muni d'une gorge et porté par une seconde partie du connecteur, ledit dispositif comportant :

- un fût globalement sous la forme d'un cylindre creux monté par sa première extrémité sur ladite première partie du connecteur et dont la seconde extrémité porte, déplaçable axialement, un tiroir externe et une détente interne,
- un organe de verrouillage positionné à travers une ouverture du fût afin de coopérer avec le tiroir externe et la détente interne pour assurer le verrouillage de l'élément globalement cylindrique caractérisé en ce que ladite seconde extrémité du fût est fermée par un bouchon solidarisé par encliquetage, et en ce que des ressorts, sont interposés entre le bouchon et, d'une part le tiroir externe, d'autre part la détente interne, afin de soumettre ceux-ci à une sollicitation tendant à les éloigner dudit bouchon.

- L'invention vise également les dispositions ci-après :

    - Le bouchon présente une face d'extrémité portant une couronne dont la paroi est découpée par des fentes pour former des pattes élastiques assurant l'encliquetage du bouchon, sur la deuxième extrémité du fût.

    - Le tiroir présente un épaulement interne servant de butée contre la face d'extrémité de la couronne, afin que le tiroir ne puisse se désolidariser du dispositif.

    - Le bouchon présente une face d'extrémité portant une couronne dont la paroi est découpée par des fentes pour former des pattes élastiques assurant l'encliquetage du bouchon, sur la deuxième extrémité du fût.

    - Le tiroir présente un épaulement interne servant de butée contre la face d'extrémité de la couronne, afin que le tiroir ne puisse se désolidariser du dispositif.

    - La détente présente, à son extrémité éloignée du bouchon, un pion axial de faible diamètre.

    - Ladite première extrémité par laquelle le fût est monté sur ladite première partie du connecteur, est rendue déformable par au moins une fente longitudinale pour son encliquetage derrière un épaulement que présente ladite première partie du connecteur.

    - Le fût présente d'une part une portion élargie dont la surface externe est à facettes et coopère avec une ouverture, de surface interne correspondante, de la première partie du connecteur, et d'autre part une rainure interne destinée à recevoir une clavette solidaire de l'élément globalement cylindrique, afin d'assurer une indexation des deux parties du connecteur.

La présente invention sera mieux comprise et d'autres avantages de celle-ci pourront être mis en évidence par la description qui va suivre en référence au dessin dans lequel :

    - la figure 1 est une vue en coupe longitudinale du dispositif selon l'invention en position de verrouillage,

    - la figure 2 est une vue en coupe longitudinale du dispositif selon l'invention en position de déverrouillage,

    - la figure 3 est une vue analogue à celle de la figure 1 pour une variante de réalisation du dispositif selon l'invention.

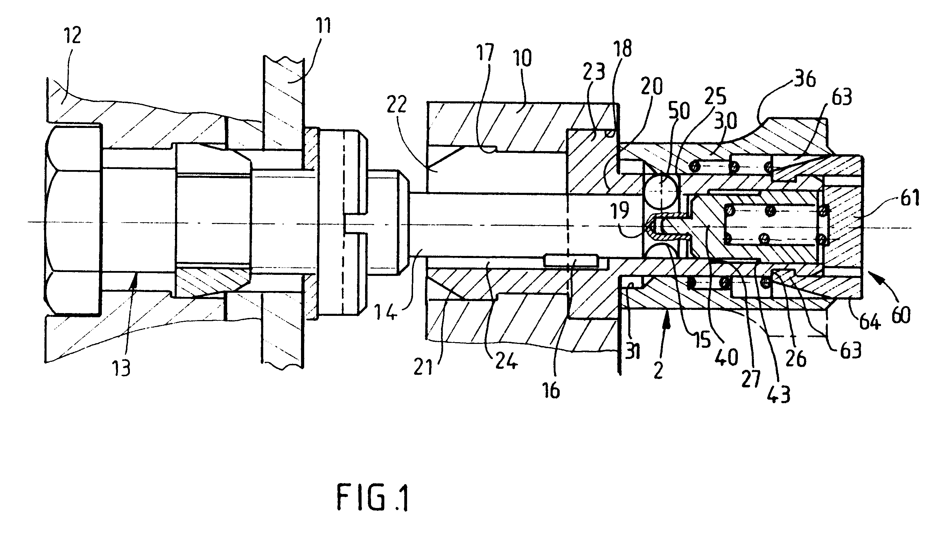

Sur la figure 1, on voit en 10 et 12 deux portions du connecteur non représenté devant être verrouillé grâce au dispositif selon l'invention.

La partie 12 est une partie fixe solidaire d'une cloison 11, la partie 12 est fixée à la cloison 11, par exemple à l'aide d'un boulon 13.

Cette partie fixe porte des broches 14, dont une seule est représentée sur la figure, destinées à être verrouillées par des dispositifs 2 selon l'invention portés par la partie mobile 10.

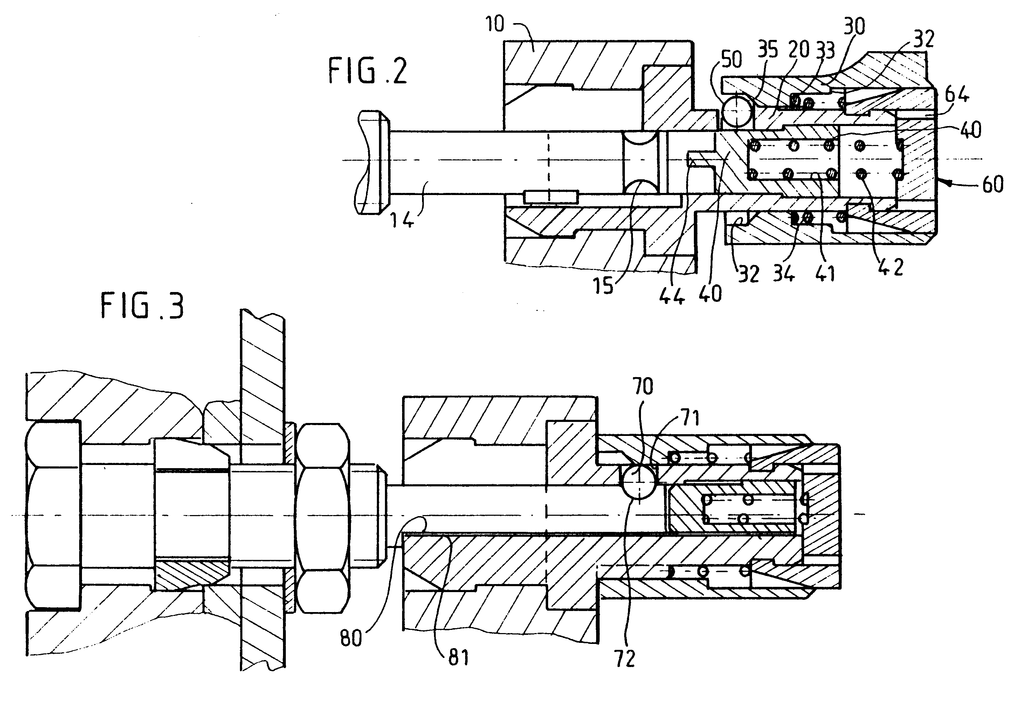

Tel que visible sur les figures 1 et 2, la broche 14 est un élément globalement cylindrique de section ronde présentant à son extrémité distante de la partie 12 du connecteur une gorge 15 circonférentielle de section en demi-cercle.

Ladite broche 14 porte de plus dans l'exemple représenté, une clavette 16 venue de moulage, ou qui lui est solidarisée par tout moyen connu tel que collage, soudage, vissage dont l'utilité sera décrite plus loin.

Le dispositif 2 selon l'invention est un dispositif pouvant se fixer simplement sur la partie mobile 10 du connecteur et devant se verrouiller sur lesdites broches 14 afin d'assurer la solidarisation des deux parties 10 et 12 du connecteur.

Le dispositif de verrouillage selon l'invention comporte un fût 20 globalement cylindrique et creux.

L'extrémité 21 du fût 20 est prévue de manière à pouvoir s'encliqueter derrière un épaulement 17 de la partie 10 de connecteur.

A cet effet, si le matériau utilisé pour la fabrication dudit fût 20 n'est pas assez élastique, au moins une fente 22 longitudinale sera pratiquée pour conférer à ladite extrémité 21 la souplesse nécessaire.

A la suite de la partie d'extrémité 21 destinée à l'encliquetage sur le connecteur, le fût 20 présente une portion élargie 23 dont la surface externe peut être conformée avec des facettes.

Lorsque ladite portion 23 est à facettes, l'ouverture 18 du connecteur dans laquelle elle est positionnée présente une surface interne semblable ce qui permet d'indexer le dispositif 2 par rapport à la partie 10 de connecteur.

Une telle indexation est utilisée en même temps qu'une broche 14 portant comme dans l'exemple représenté une clavette 16.

On peut alors orienter la broche 14 par rapport à la partie 12 de connecteur et le dispositif de verrouillage 2 par rapport à la partie 10 pour que lesdites parties 10 et 12 soient solidarisées dans une position relative définie.

L'indexation du dispositif 2 par rapport au connecteur permet de positionner correctement la rainure 24 que présente le fût 20 sur sa surface interne afin de permettre le passage de la clavette 16 que porte la broche.

L'extrémité du fût 20 opposée à l'extrémité 21 d'encliquetage est entourée par un tiroir externe 30 et renferme une détente interne 40.

Un moyen de verrouillage formé dans l'exemple des figures 1 et 2 par des billes 50 positionnées dans des ouvertures 25 du fût 20 est également prévu.

Les billes 50 sont dans la position de verrouillage de la figure 1 en partie positionnées dans la gorge circonférentielle 15 de la broche 14, tandis que, figure 2, en position de déverrouillage elles sont dans un logement 31 que présente le tiroir externe 30.

Le tiroir externe 30 et la détente interne 40 sont tous les deux déplaçables axialement par rapport au fût 20.

L'extrémité du fût 20 est fermée par une bouchon 60. Ce bouchon 60 présente une face d'extrémité 61 dont dépend une couronne 62 dont la paroi est découpée par des fentes pour former des pattes 63 élastiques se rapprochant de l'axe à mesure qu'elles s'écartent de la face d'extrémité 61.

Ces pattes 63 sont conformées afin de s'encliqueter dans une rainure 26 prévue à cet effet sur la surface externe du fût 20.

Le bouchon 60 peut être fixé à l'extrémité du fût 20 par tout autre moyen, par exemple par collage ou vissage.

Le fût 20, le tiroir 30, la détente 40, le bouchon 60 sont de manière avantageuse obtenus par moulage d'une matière thermoplastique. Sur sa périphérie, le bouchon 60 porte une marque 64 visible seulement lorsque le tiroir 30 est en position de verrouillage. Cette marque permet de visualiser la réalisation du verrouillage.

L'alésage du tiroir 30 présente deux épaulements 32 et 33. L'épaulement 32 sert de butée contre la face d'extrémité de la couronne 62 afin que le tiroir 30 ne puisse être désolidarisé du dispositif 2.

L'épaulement 33 sert d'appui à un ressort 34 positionné entre le tiroir 30 et le bouchon 60 et sollicitant ledit tiroir 30 dans le sens tendant à l'éloigner du bouchon 60.

La détente interne 40 présente à son extrémité tournée vers le bouchon 60 un alésage borgne 41 dans lequel est positionné un ressort 42 tendant à l'éloigner du bouchon 60.

Un épaulement 43 est prévu sur la surface externe de la détente 40 afin de coopérer avec un épaulement interne 27 du fût 20 pour que ladite détente 40 ne puisse sortir dudit fût sous l'action du ressort 42.

A son extrémité éloignée du bouchon 60, la détente 40 présente un pion axial 44 de faible diamètre destiné à la retenue des billes 50 en cas de retrait accidentel de la détente 40.

Le montage d'un dispositif selon l'invention peut être fait de manière simple et rapide ; la détente 40 est enfilée dans le fût 20 jusqu'à ce que les épaulements 27 et 43 soient au contact l'un de l'autre, on peut alors introduire le tiroir 30 et les billes 50 puis les ressorts 34 et 42 et enfin fermer et assurer le maintien de tous les éléments en encliquetant le bouchon 60.

Lorsque le dispositif 2 selon l'invention est au repos tel que représenté à la figure 2, c'est-à-dire lorsque la broche 14 n'est pas encore verrouillée les billes de verrouillage 50 sont dans les ouvertures 25 du fût 20 et dans le logement 31 situé à l'extrémité du tiroir 30.

Elles sont maintenues dans cette position par la détente 40 qui est poussée par le ressort 42 jusqu'à ce que les épaulements 43 et 27 soient en contact.

Le tiroir 30 est au contact des billes 50 sous la sollicitation du ressort 34.

Les dimensions relatives des différents éléments formant le dispositif 2 sont prévues de telle manière que si l'on sollicite le tiroir 30 à l'encontre du ressort 34 jusqu'à ce qu'il soit au contact du bouchon 60 par son épaulement 32, les billes 50 ne puissent s'échapper par l'espace libre entre le fût 20 et le tiroir 30.

De même, le pion 44 est dimensionné afin que les billes 50 ne puissent pas s'échapper par l'alésage du fût 20 si l'on repousse la détente 40 à l'aide d'un outil.

Si l'on appuie par inadvertance sur la détente 40, à l'intérieur du fût 20, les billes 50 sont repoussées vers l'intérieur par le tiroir 30 et viennent se bloquer contre le pion central 44, ce qui empêche le verrouillage. Il faut alors réarmer le dispositif de verrouillage avec un outil spécial.

Afin de solidariser les parties 10 et 11 du connecteur, chaque broche 14 est enfilée dans un dispositif 2. Ladite broche présente comme visible à la figure 1 un trou borgne 19 dans lequel pénètre le pion 44 de la détente.

Lorsque ledit pion 44 est totalement dans le trou borgne 19, la broche 14 pousse la détente vers le bouchon 60 jusqu'à ce que les billes 50 tombent dans la gorge 15 de la broche, sollicitées par le plan incliné 35 du logement 31 du tiroir 30 que pousse le ressort 34. Dès que les billes 50 sont ainsi dans la gorge 15, le ressort 34 pousse le tiroir 30 jusqu'à ce qu'il soit au contact de la portion 23 du fût. Les billes sont alors maintenues dans leur position de verrouillage par la surface interne du tiroir 30 comme visible à la figure 1.

Dans cette position, la broche 14 est parfaitement maintenue verrouillée. De manière avantageuse, une bande de peinture 64 est prévue sur l'extrémité, alors découverte, du bouchon 60 afin de servir comme repère visuel du verrouillage.

Le déverrouillage s'effectue en tirant le tiroir 30 à l'encontre de l'action du ressort 34 ce qui amène le logement 31 en face des billes 50 qui peuvent alors se repositionner dans celui-ci.

Le déplacement du tiroir 30 se fait tout en tirant sur le dispositif 2 et donc la partie 10 du connecteur afin de les éloigner de la broche 14. Les billes sont ainsi repoussées dans le logement 31 par l'action du bord de la gorge 15.

Afin de favoriser la prise du tiroir 30 pour son déplacement, celui-ci est conformé avec un épaulement externe 36.

Dans le cas où il n'y a de la place que sur un côté du dispositif, on prévoit cet épaulement 36 sur une partie seulement de la surface externe et, le tiroir 30 pouvant tourner autour du fût 20, on le positionne du côté libre lors du montage par encliquetage du dispositif sur la partie 10 du connecteur.

La figure 3 représente une variante de réalisation du dispositif dans laquelle le moyen de verrouillage est formé d'un rouleau 70 coopérant avec une gorge 72 de la broche et avec un logement 71 du tiroir qui sont alors localisés et non circonférentiels. Dans ce cas, la gorge 72 et le rouleau 70 sont de forme cylindrique.

Dans cette réalisation l'indexation de la broche par rapport au fût se fait par des méplats 80 et 81 s'étendant axialement sur toute la longueur du dispositif.

Avantageusement, à l'exception des billes et des ressorts, les pièces du dispositif sont en matière plastique. Parmi les avantages procurés par le dispositif de verrouillage selon l'invention, il faut relever la sécurité d'utilisation. En effet, lorsque le connecteur est accouplé et le verrouillage réalisé, le tiroir 30 est en position avancée et la marque de visualisation est visible. Lorsque le connecteur n'est pas accouplé, le verrouillage ne peut pas être assuré, le tiroir 30 reste en position retirée et la marque de visualisation reste cachée.

On peut noter également que les billes ont toujours un rôle actif : en position de déverrouillage, elles maintiennent le tiroir en position retirée pour masquer la marque de visualisation ; en position de verrouillage, elles maintiennent la broche 14 dans le fût 20.

**Revendications**

1. Ensemble comportant un connecteur et un dispositif de verrouillage du genre destiné à être monté sur une première partie (10) que présente ledit connecteur afin d'assurer le guidage et le verrouillage d'un élément globalement cylindrique (14) muni d'une gorge (15) et porté par une seconde partie (11) du connecteur, ledit ensemble comportant :
   - un fût (20) globalement sous la forme d'un cylindre creux monté par sa première extrémité (21) sur ladite première partie (10) du connecteur et dont la seconde extrémité porte, déplaçable axialement, un tiroir externe (30) et une détente interne (40),
   - un organe de verrouillage (50) positionné à travers une ouverture (25) du fût (20) afin de coopérer avec le tiroir externe (30) et la détente interne (40) pour assurer le verrouillage de l'élément globalement cylindrique (14) caractérisé en ce que ladite seconde extrémité du fût (20) est fermée par un bouchon (60) solidarisé par encliquetage, et en ce que des ressorts (34, 42), sont interposés entre le bouchon (60) et, d'une part le tiroir externe (30), d'autre part la détente interne (40), afin de soumettre ceux-ci à une sollicitation tendant à les éloigner dudit bouchon (60).

2. Ensemble selon la revendication 1 précédente, caractérisé en ce que le bouchon (60) présente une face d'extrémité (61) portant une couronne (62) dont la paroi est découpée par des fentes pour former des pattes (63) élastiques assurant l'encliquetage du bouchon, sur la deuxième extrémité du fût (20).

3. Ensemble selon la revendication 2, caractérisé en ce que le tiroir (30) présente un épaulement interne (32) servant de butée contre la face d'extrémité de la couronne (62), afin que le tiroir (30) ne puisse se désolidariser de l'ensemble.

4. Ensemble selon l'une quelconque des revendications 1 à 3 caractérisé en ce que la détente (40) présente, à son extrémité éloignée du bouchon (60), un pion axial (44) de faible diamètre.

5. Ensemble selon l'une des revendications de 1 à 4 caractérisé en ce que ladite première extrémité (21) par laquelle le fût (20) est monté sur ladite première partie (10) du connecteur, est rendue déformable par au moins une fente (22) longitudinale pour son encliquetage derrière un épaulement (17) que présente ladite première partie (10) du connecteur.

6. Ensemble selon la revendication 5 caractérisé en ce que le fût (20) présente d'une part une portion élargie (23) dont la surface externe est à facettes et coopère avec une ouverture (18), de surface interne correspondante, de la première partie (10) du connecteur, et d'autre part une rainure interne (24) destinée à recevoir une clavette (16) solidaire de l'élément globalement cylindrique (14), afin d'assurer une indexation des deux parties (10, 11) du connecteur.

**Patentansprüche**

1. Vorrichtung mit einem Verbindungselement und einer Verriegelungsvorrichtung von der Art, die dazu bestimmt ist, an einem ersten Teil (10) montiert zu werden, das das Verbindungselement aufweist, um die Führung und Verriegelung eines im wesentlichen zylindrischen Elements (14) sicherzustellen, welches mit einer Nut (15) versehen ist und von einem zweiten Teil (11) des Verbindungselements getragen wird, wobei die Vorrichtung folgendes umfaßt:
    - einen Schaft (20), der im wesentlichen die Form eines hohlen Zylinders aufweist, und der mit seinem ersten Ende (21) an dem ersten Teil (10) des Verbindungselements montiert ist, und dessen zweites Ende einen äußeren Schieber (30) und einen inneren Abzug (40) axial verschiebbar trägt,
    - ein Verriegelungsorgan (50), welches gegenüber einer Öffnung (25) des Schafts (20) angeordnet ist, um mit dem äußeren Schieber (30) und dem inneren Abzug (40) zusammenzuwirken, um die Verriegelung des im wesentlichen zylindrischen Elements (14) sicherzustellen, **dadurch gekennzeichnet,** daß das zweite Ende des Schaftes (20) mittels eines Stöpsels (60) verschlossen ist, der mittels Einklipsen befestigt ist, und dadurch, daß Federn (34,42) zwischen dem Stöpsel (60) und einerseits dem äußeren Schieber (30) und andererseits dem inneren Abzug (40) angeordnet sind, um diese beiden mit einer Kraft zu beaufschlagen, die dazu neigt, sie von dem Stöpsel (60) zu entfernen.

2. Vorrichtung nach Anspruch 1, **dadurch gekennzeichnet**, daß der Stöpsel (60) eine Endfläche (61) aufweist, die einen Kranz (62) trägt, dessen Wand durch Schlitze unterbrochen ist, um elastische Halterungen (63) zu bilden, die das Einschnappen des Stöpsels auf dem zweiten Ende des Schaftes (20) sicherstellen.

3. Vorrichtung nach Anspruch 2, **dadurch gekennzeichnet**, daß der Schieber (30) einen internen Absatz (32) aufweist, der als Anschlag gegen die Endfläche des Kranzes (62) dient, damit der Schieber (30) sich nicht von der Anordnung trennen kann.

4. Vorrichtung nach einem der Ansprüche 1 bis 3, **dadurch gekennzeichnet**, daß der Abzug (40) an seinem von dem Stöpsel (60) entfernten Ende einen axialen Zapfen (44) von geringem Durchmesser aufweist.

5. Vorrichtung nach einem der Ansprüche 1 bis 4, **dadurch gekennzeichnet**, daß das erste Ende (21), durch das der Schaft auf dem ersten Teil (10) des Verbindungselementes montiert ist, verformbar gemacht ist mittels mindestens eines Längsschlitzes (22) für das Einklipsen hinter einer Stufe (17), die das erste Teil des Verbindungselementes aufweist.

6. Vorrichtung nach Anspruch 5, **dadurch gekennzeichnet**, daß der Schaft (20) einerseits einen vergrößerten Abschnitt (23)aufweist, dessen äußere Oberfläche mehrfach abgeflacht ist und mit einer Öffnung (18) mit einer entsprechenden inneren Oberfläche zusammenwirkt, die in dem ersten Teil (10) des Verbindungselementes vorgesehen ist und andererseits eine innere Nut (24) aufweist, die dazu dient, einen Keil (16) aufzunehmen, der mit dem im wesentlichen zylindrischen Element (14) in Verbindung steht, um eine Zuordnung der beiden Teile (10, 11) des Verbindungselementes sicherzustellen.

## Claims

1. An assembly including a connector and a latching device of the type adapted for being mounted on a first portion (10) comprised in said connector in order to guide and latch a globally cylindrical element (14) provided with a groove (15) and carried by a second portion (11) of the connector, said assembly including:

    - a shaft (20) globally in the shape of a hollow cylinder mounted via its first end (21) on said first portion (10) of the connector and the second end of which carries, in an axially movable way, an outer slide (30) and an inner detent (40),

    - a latching member (50) positioned across an opening (25) of the shaft (20) so as to cooperate with the outer slide (30) and the inner detent (40) in order to ensure the latching of the globally cylindrical element (14),

    characterized in that said second end of the shaft (20) is closed by a cover (60) retained by a snap-in engagement, and in that springs (34, 42) are interposed between the cover (60), and, on the one hand the outer slide (30) and on the other hand the inner detent (40), so as to subject these elements to a bias tending to move them away from said cover (60).

2. An assembly according to claim 1, characterized in that the cover (60) has an end face (61) carrying a crow (62) the wall of which is cut out by grooves so as to form resilient lugs (63) ensuring the snap-in engagement of the cover on the second end of the shaft (20).

3. An assembly according to claim 2, characterized in that the slide (30) is formed with an inner shoulder (32) acting as an abutment against the end face of the crown (62) so that the slide (30) cannot be detached from the assembly.

4. An assembly according to any one of claims 1 to 3, characterized in that the detent (40) is formed, at its end which is remote from the cover (60), with an axial pin (44) of small diameter.

5. An assembly according to one of claims 1 to 4, characterized in that said first end (21) through which the shaft (20) is mounted on said first portion (10) of the connector is rendered deformable by at least one longitudinal groove (22) for its snap-in engagement behind a shoulder (17) formed on the first portion (10) of the connector.

6. An assembly according to claim 5, characterized in that the shaft (20) is formed on the one hand with a widened portion (23) the outer surface of which is with facets and cooperates with an opening (18), of corresponding inner surface, of the first portion (10) of the connector, and on the other hand with an inner slot (24) adapted for receiving a key (16) rigidly connected to the globally cylindrical element (14) so as to ensure an indexation of the two portions (10, 11) of the connector.

FIG.1

FIG.2

FIG.3

EP 0 401 097 B1